# EUROPÄISCHE PATENTANMELDUNG

(11) **EP 4 575 221 A1**
(43) Veröffentlichungstag der Anmeldung: **25.06.2025**
(21) Anmeldenummer: 24215796.4
(22) Anmeldetag: 27.11.2024
(51) Int. Cl.: F03D 13/20, E04H 12/10

(54) **TELESKOPIERBARER GITTERMASTTURM UND VERFAHREN ZUM HEBEN EINES TELESKOPIERBAREN GITTERMASTTURMS**

(30) Priorität: 19.12.2023 DE 102023135717
(71) Anmelder: GICON Grossmann Ingenieur Consult GmbH, 01219 Dresden (DE)
(72) Erfinder: GROßMANN, Jochen, Dresden (DE); HENNHÖFER, Carsten, Dresden (DE); POHLMANN, Henric, Dresden (DE); ADAM, Frank, Dresden (DE)
(74) Vertreter: Kailuweit & Uhlemann Patentanwälte Partnerschaft mbB

(57) **Zusammenfassung**

Die Erfindung betrifft einen teleskopierbarer Gittermastturm einer Windkraftanlage, mindestens umfassend eine untere Turmbaugruppe, eine obere Turmbaugruppe, und ein Hubsystem zum Anheben und Absenken der oberen Turmbaugruppe. Das Hubsystem umfasst dabei mindestens ein Führungselement, zwei Führungsrahmen, ein Stabilisierungssystem, und eine Mehrzahl temporär einsetzbare erster Litzenheber. Weiterhin betrifft die Erfindung ein Verfahren zum Heben eines erfindungsgemäße teleskopierbaren Gittermastturm und die Verwendung des teleskopierbaren Gittermastturms.

## Beschreibung

Die Erfindung betrifft einen teleskopierbaren Gittermastturm und ein Verfahren zum Heben des teleskopierbaren Gittermastturms.

Für die Steigerung des wirtschaftlichen Ertrags von Windparks ist es sinnvoll, die gleichmäßigeren Windverhältnisse in Höhen von 300 m durch Integration einer zweiten Ebene in bestehende Windparks zu nutzen.

Aus dem Stand der Technik sind eine Vielzahl unterschiedlicher Turmmasten für Windenergieanlagen mit Bauhöhen über 100 m bekannt, bspw. aus DE 10 2015 115 634 A1, DE 10 2005 047 961 A1 und DE 10 2004 020 480 B4 sogenannte Hybridtürme mit einem oberen rohrförmig ausgebildeten Turmbereich und einem unteren gittermastartig ausgebildeten Turmbereich. Die tatsächlich realisierbare Bauhöhe derartiger Türme ist durch die Verfügbarkeit entsprechender Hebevorrichtungen bspw. Kräne limitiert und Höhen von 300 m praktischerweise nicht realisierbar.

EP 3 728 765 B1 offenbart einen Gittermast als Turm einer Windkraftanlage aus einem ersten und einem zweiten Bestandteil, der in dem ersten Bestandteil geführt wird. Dazu weist der erste Bestandteil Schienen zum Führen eines Führungselements des zweiten Bestandteils auf. Weiterhin weisen die beiden Bestandteile jeweils vier rohrförmige Stützen auf, die mittels Ankerplatten miteinander verbunden sind und ein Einfahren des zweiten Bestandteils in den ersten Bestandteil ermöglichen.

DE 10 2008 022 654 A1 offenbart ein Verfahren und eine Vorrichtung zur Montage einer Windenergieanlage, wobei mittels einer an einem Hilfsmast geführten Hubgondel zu montierende Bauwerkmodule auf die Montagehöhe anzuheben und zur Montage dort zu halten.

Aufgabe der Erfindung ist es daher einen teleskopierbaren Gittermastturm, insbesondere mit einer Nabenhöhe von 300 m, bereitzustellen, der unter Ausnutzung derzeit verfügbarer Krankapazitäten errichtet werden kann.

Erfindungsgemäß wird die Aufgabe durch einen teleskopierbaren Gittermastturm mit den Merkmalen gemäß dem unabhängigen Anspruch 1 und ein Verfahren zum Heben des erfindungsgemäßen Gittermastturms gemäß dem unabhängigen Anspruch 10 gelöst. Vorteilhafte Ausgestaltungen der Erfindung sind in den abhängigen Ansprüchen angegeben.

Ein erster Aspekt der Erfindung betrifft einen teleskopierbaren Gittermastturm mindestens umfassend eine untere Turmbaugruppe, eine obere Turmbaugruppe, und ein Hubsystem zum Anheben und Absenken der oberen Turmbaugruppe. Das Hubsystem umfasst dabei mindestens ein Führungselement, zwei Führungsrahmen, ein Stabilisierungssystem, und eine Mehrzahl temporär einsetzbarer erster Litzenheber.

Ein derartiger Gittermastturm kann vorteilhaft endgültige Nabenhöhen im fertig installierten Zustand von mindestens 300 m aufweisen. Weiterhin vorteilhaft ist ein derartiger Gittermastturm einfach an seinen Aufbauort transportierbar und am Aufbauort auf die endgültige Nabenhöhe anzuheben. Ebenfalls vorteilhaft ermöglicht ein derartiger Gittermastturm eine einfachere Wartung bzw. Austausch/Reparatur von Komponenten auf einer gegenüber der endgültigen Nabenhöhe reduzierten Nabenhöhe durch Absenken des Gittermastturms.

Telekopierbar im Sinne der Erfindung meint, dass der Gittermastturm in seiner Höhe entlang der Längsachse des Gittermastturms veränderbar ist durch Anheben bzw. Absenken von Teilen des Gittermastturms, bspw. durch Anheben oder Absenken der oberen Turmbaugruppe mittels des Hubsystems. Das Anheben wird auch als Hebeprozess und das Absenken als Absenkprozess bezeichnet. Der teleskopierbare Gittermastturm weist daher mindestens einen abgesenkten Zustand mit einer minimalen Höhe bzw. Ausdehnung entlang der Längsachse des Gittermastturms und einen angehobenen oder auch fertig installierten Zustand mit einer maximalen Höhe entlang der Längsachse des Gittermastturms auf. Es ist vorteilhaft, wenn die obere Turmbaugruppe derart ausgebildet ist, dass im abgesenkten Zustand eine vollständige Anordnung der oberen Turmbaugruppe innerhalb der unteren Turmbaugruppe möglich ist. Im angehobenen Zustand ist die obere Turmbaugruppe auf der unteren Turmbaugruppe angeordnet. In Ausführungsformen ist die untere Turmbaugruppe mit einem Fundament verbindbar ausgebildet. Dabei dient das Fundament der Verankerung des teleskopierbaren Gittermastturms am Boden und kann in bekannter Art ausgebildet sein, bspw. als kompakte Flach- oder Pfahlgründung oder als kombinierte Pfahlplattengründung. In weiteren Ausführungsformen ist die untere Turmbaugruppe an ihren vier Eckstielen mit einzelnen Eckfundamenten verbindbar ausgebildet. Die Verbindung der unteren Turmbaugruppe mit dem Fundament erfolgt dabei mittels dem Fachmann bekannter Verbindungsmittel, bspw. Eckstielen aus L-Profilen und mit einbetonierten Fußankern, einer in das Fundament eingegossenen Schweißbaugruppe, bspw. einem Fußanker.

In Ausführungsformen ist das Führungselement als Gitterelement ausgebildet und weist Lastaufnahmepunkte auf. Lastaufnahmepunkte im Sinne der Erfindung meint Anschlagpunkte für Lastaufnahmemittel, bspw. ausgebildet als Lastaufnahmeösen. In weiteren Ausführungsformen sind die Lastaufnahmepunkte am unteren Ende des Führungselements angeordnet. Das untere Ende des Führungselements meint jenes Ende des Führungselements, welches entlang der Längsachse des Gittermastturms am weitesten von der Nabe entfernt ist.

In weiteren Ausführungsformen ist das Führungselement als Gitterelement mit einem vieleckigen, insbesondere viereckigen, Querschnitt ausgebildet. Der Querschnitt erstreckt sich dabei in einer Ebene senkrecht zur Längsachse des Gittermastturms. In weiteren Ausführungsformen ist das Führungselement innerhalb der unteren Turmbaugruppe angeordnet, d.h. das Führungselement wird von der unteren Turmbaugruppe umgeben. Dies ermöglicht vorteilhaft das Teleskopieren, d.h. die Veränderung der Höhe des Gittermastturms. Dazu ist es vorteilhaft, wenn die Abmessungen des Querschnitts des Führungselements geringere Abmessungen als der Querschnitt der unteren Turmbaugruppe aufweisen, so dass die obere Turmbaugruppe innerhalb der unteren Turmbaugruppe angeordnet werden kann.

In weiteren Ausführungsformen ist die obere Turmbaugruppe temporär auf dem Führungselement, bevorzugt auf dem oberen Ende des Führungselements, montierbar und bildet eine sogenannte Hubbaugruppe für die Dauer des Hebe- und/oder Absenkprozesses. Vorteilhaft ist die obere Turmbaugruppe für die Dauer des Hebeprozesse und/oder Absenkprozesses auf dem Führungselement montierbar. Dazu ist es vorteilhaft, wenn die obere Turmbaugruppe und/oder das Führungselement Montierungsmittel aufweisen, welche bevorzugt am oberen Ende des Führungselements und/oder am unteren Ende der oberen Turmbaugruppe angeordnet sind. Die Hubbaugruppe ist vorteilhaft innerhalb der unteren Turmbaugruppe angeordnet. Diese Hubbaugruppe wird zum Erreichen der endgültigen Nabenhöhe bzw. des angehobenen/fertig installierten Zustands aus der unteren Turmbaugruppe herausgehoben.

In weiteren Ausführungsformen weist das Führungselement eine Höhe, d.h. eine Ausdehnung entlang der Längsachse des Gittermastturms, im Bereich von 45 m bis 50 m auf.

Die Führungsrahmen sind innerhalb der unteren Turmbaugruppe entlang der Längsachse des Gittermastturms, bevorzugt im oberen Bereich der unteren Turmbaugruppe, angeordnet und fest mit der unteren Turmbaugruppe verbunden. Die Verbindung erfolgt in Ausführungsformen mittels einer Schraub- und Schweißverbindung, so dass die Führungsrahmen vorteilhaft in die Ausfachung eines Turmsegmentes integriert werden können. Die beiden Führungsrahmen bilden eine sogenannte Stütz- und Gleitzone. Vorteilhaft verhindert diese ein Verkippen der Hubbaugruppe während des Anhebens und/oder Absenkens des teleskopierbaren Gittermastturms. Weiterhin vorteilhaft ist zu jedem Zeitpunkt während des Anhebens und/oder Absenkens zumindest ein Bereich der Hubbaugruppe innerhalb der durch die beiden Führungsrahmen gebildeten Stütz- und Gleitzone angeordnet. Zu Beginn des Hebeprozesses ist bspw. die auf dem Führungselement montierte obere Turmbaugruppe innerhalb der Stütz- und Gleitzone bzw. innerhalb der beiden Führungsrahmen angeordnet, während zum Ende des Hebeprozesses das Führungselement innerhalb der Stütz- und Gleitzone angeordnet ist. Dazu ist es vorteilhaft, wenn die Führungsrahmen derart ausgebildet sind, dass Hubbaugruppe während des Anhebens und/oder Absenkens durch die Führungsrahmen hindurchbewegt werden kann.

In weiteren Ausführungsformen weisen die Führungsrahmen einen vieleckigen, insbesondere achteckigen Querschnitt auf. In Ausführungsformen sind die Abmessungen des Querschnitts der Führungsrahmen derart ausgebildet, dass die Führungsrahmen sowohl innerhalb der unteren Turmbaugruppe angeordnet werden können als auch die Hubbaugruppe durch die Führungsrahmen hindurchbewegt werden kann.

In weiteren Ausführungsformen sind die Führungsrahmen entlang der Längsachse des Gittermastturm zueinander beabstandet angeordnet. In Ausführungsformen sind die beiden Führungsrahmen über entlang der Längsachse des Gittermastturms verlaufende Stege miteinander verbunden und bilden eine Art Käfig, durch den die Hubbaugruppe beim Anheben und/oder Absenken hindurchbewegt wird. In weiteren Ausführungsformen weisen die Führungsrahmen Gleitvorrichtungen auf, die vorteilhaft ein Durchgleiten der Hubbaugruppe durch die Stütz- und Gleitzone während des Anhebens und/oder Absenkens ermöglichen. Derartige Gleitvorrichtungen können bspw. als Gleitbacken ausgebildet sein. Dabei sind die Gleitvorrichtungen in Ausführungsformen an den Innenseiten der Führungsrahmen, welche während des Anhebens und/oder Absenkens der Hubbaugruppe zugewandt sind.

Temporär einsetzbare erste Litzenheber im Sinne der Anmeldung meint erste Litzenheber, die nur zeitweise während des Hebe- und/oder Absenkprozesses des teleskopierbaren Gittermastturms eingesetzt werden und nicht Bestandteil des fertig errichteten Gittermastturms sind. Gleiches gilt für die weitere Verwendung von "temporär" in dieser Anmeldung und bezieht sich jeweils auf den Einsatz bzw. Montage der entsprechenden Komponenten während des Hebe- und/oder Absenkprozesses und betrifft die ersten Litzenheber, die temporäre Montage der oberen Turmbaugruppe auf dem Führungselement, temporäre einsetzbare Zusatzgewichte, die temporäre Verbindung der vier beweglich gelagerten Stützarme mit der Plattform des Stabilisierungssystems und die temporäre Installation der mehreren Vorrichtungen zum Heben und Senken auf der Plattform des Stabilisierungssystems. Vorteilhaft dienen die ersten Litzenheber zum Heben und/oder Senken der Hubbaugruppe. In Ausführungsformen weisen die Litzenheber jeweils ein Hydraulikaggregat und eine Steuereinheit auf. In weiteren Ausführungsformen weist die Mehrzahl der ersten Litzenheber ein gemeinsames Hydraulikaggregat und/oder eine gemeinsame Steuereinheit auf. In weiteren Ausführungsformen sind die temporär einsetzbaren ersten Litzenheber während des Hebe- und/oder Absenkprozesses auf dem oberen der beiden Führungsrahmen angeordnet. Der obere der beiden Führungsrahmen ist dabei näher in Richtung dem oberen Ende der unteren Turmbaugruppe angeordnet. Die Litzenheber umfassen üblicherweise auch Litzenführungen zzgl. Halterung. Die Litzenführungen werden im Ausführungsformen am Gittermastturm, bevorzugt an der unteren Turmbaugruppe entlang nach unten geführt. Dabei meint "unten" in Richtung der Aufstellfläche des Gittermastturms. In weiteren Ausführungsformen werden die Litzen entlang der Eckstiele der unteren Turmbaugruppe nach unten entlanggeführt.

In Ausführungsformen umfasst das Hubsystem vier erste Litzenheber. In weiteren Ausführungsformen weisen die ersten Litzenheber jeweils einen Hub im Bereich von 120 m bis 180 m auf. In weiteren Ausführungsformen weisen die ersten Litzenheber jeweils eine Kapazität im Bereich von 200 t bis 250 t auf. In weiteren Ausführungsformen sind die Mehrzahl der temporären ersten Litzenheber gleichmäßig entlang des Führungsrahmen verteilt angeordnet, bevorzugt in den Ecken des Führungsrahmens.

In bevorzugten Ausführungsformen ist die obere Turmbaugruppe mit einer Rotor-Gondel-Baugruppe verbindbar ausgebildet.

In Ausführungsformen ist das obere Ende der oberen Turmbaugruppe mit einer Rotor-Gondel-Baugruppe verbindbar ausgebildet. Dazu weist die obere Turmbaugruppe dem Fachmann bekannte Verbindungsmittel auf. Das obere Ende der oberen Turmbaugruppe meint dabei das Ende der oberen Turmbaugruppe, welches im fertig installierten Zustand des Gittermastturms entlang der Längsachse des Gittermastturms am weitesten vom Boden, auf dem der Gittermastturm aufgestellt ist, entfernt ist.

In Ausführungsformen weist die obere Turmbaugruppe an ihrem oberen Ende ein Verbindungsstück auf. Vorteilhaft ist mittels dieses Verbindungsstücks die Rotor-Gondel-Baugruppe mit der oberen Turmbaugruppe verbindbar ausgebildet. Derartige Verbindungsstücke sind dem Fachmann bekannt.

In bevorzugten Ausführungsformen weist das Hubsystem weiterhin temporär einsetzbare Zusatzgewichte zur Schwerpunktoptimierung auf.

Vorteilhaft ermöglichen die Zusatzgewichte ein Ausbalancieren bzw. Zentrieren des Schwerpunkts des teleskopierbaren Gittermastturms und eine dynamische Stabilisierung während des Hebe- und/oder Absenkprozesses, insbesondere, wenn eine Rotor-Gondel-Baugruppe vor dem Anheben bzw. Absenken des teleskopierbaren Gittermastturms auf der oberen Turmbaugruppe installiert ist. Weiterhin vorteilhaft wird durch eine Installation der Zusatzgewichte der Schwerpunk des Gesamtsystems auf der Längsachse des Turmes positioniert. Weiterhin vorteilhaft wird die Kippstabilität der oberen Turmbaugruppe durch die Absenkung des Schwerpunktes erhöht.

In Ausführungsformen sind die Zusatzgewichte als dem Fachmann bekannte Krangewichte ausgebildet. In weiteren Ausführungsformen ist das Zusatzgewicht als dritter Litzenheber ausgebildet. Dieser greift am unteren Teil des teleskopierbaren Gittermastturms an und ist auf dem Fundament des Höhenwindturms verankert. Der dritte Litzenheber bringt eine gleichmäßige Kraft entgegen den ersten Litzenhebern auf, und simuliert somit ein Gewicht.

In bevorzugten Ausführungsformen umfassen die temporär einsetzbaren Zusatzgewichte ein erstes und ein zweites Zusatzgewicht.

Vorteilhaft wird damit eine Verlagerung des Schwerpunkts und die Verringerung des Abstands zwischen dem Lastaufnahmepunkt und dem Schwerpunkt (Schwerpunkthöhe) erzielt, insbesondere wenn eine Rotor-Gondel-Baugruppe vor dem Anheben und/oder Absenken auf der oberen Turmbaugruppe installiert ist. Weiterhin vorteilhaft wird durch das erste Zusatzgewicht eine Verschiebung des Schwerpunkts auf die Längsachse des Gittermastturms und gleichzeitig eine Absenkung des Schwerpunkts erreicht. Durch das zweite Zusatzgewicht wird vorteilhaft eine weitere Absenkung des Schwerpunkts erreicht. Der Schwerpunkt meint dabei den Massenmittelpunkt des telekopierbaren Gittermastturms, der sich im abgesenkten Zustand oberhalb der Lastaufnahmepunkte befindet.

Bspw. befindet sich der Schwerpunkt eines teleskopierbaren Gittermastturms mit einer endgültigen Nabenhöhe von 300 m im fertig installierten Zustand und mit einer auf der oberen Turmbaugruppe installierter Rotor-Gondel-Baugruppe mit einer üblichen Masse von 200 t etwa 80 m oberhalb der Lastaufnahmepunkte im abgesenkten Zustand. Am Beispiel eines derartigen teleskopierbaren Gittermastturms mit einer endgültigen Nabenhöhe von 300 m und bereits im abgesenkten Zustand auf der oberen Turmbaugruppe installierter Rotor-Gondel-Baugruppe mit einer Masse von 200 t, weist in Ausführungsformen das erste temporär einsetzbare Zusatzgewicht eine Masse von 120 t auf und ist etwa 7 m hinter der Längsachse des Gittermastturms, vorteilhaft auf der der Rotor-Baugruppe gegenüberliegenden Seite der Längsachse, im Führungselement angeordnet und temporär fixiert. Die Rotor-Baugruppe als Bestandteil der Rotor-Gondel-Baugruppe befindet sich vor der Längsachse des Gittermastturms. Damit ermöglicht das temporär eingesetzte Zusatzgewicht vorteilhaft ein Absenken des Schwerpunkts auf ca. 68 m oberhalb der Lastaufnahmepunkte und ein Anheben des teleskopierbaren Gittermastturms um 60 m. Das zweite temporär einsetzbare Zusatzgewicht weist in diesem Fall eine Masse von 100 t auf und ist unterhalb des Führungselementes auf der Längsachse des Gittermastturms angeordnet und temporär fixiert. Damit wird vorteilhaft eine Verlagerung des Schwerpunktes auf eine Höhe von 56 m oberhalb der Lastaufnahmepunkte erreicht. Weiterhin vorteilhaft werden die bisher aufgrund des nicht zentrierten Schwerpunkts wirkenden Zwangskräfte ausgeschaltet.

In bevorzugten Ausführungsformen umfassen die untere und die obere Turmbaugruppe jeweils mehrere Turmbaugruppensegmente in Gitterbauweise.

Vorteilhaft sind dadurch Nabenhöhen von mindestens 300 m des teleskopierbaren Gittermastturms erreichbar. Weiterhin vorteilhaft ist die Fertigung eines derartigen Gittermastturms vereinfacht.

In Ausführungsformen sind die einzelnen Turmbaugruppensegmente miteinander verbunden und bilden die untere bzw. die obere Turmbaugruppe. Die Verbindung kann dabei über jegliche dem Fachmann bekannte und geeignete Verbindungsmittel erfolgen, bspw. mittels einer gleitfest vorgespannten Schraubverbindung, bestehend aus mehreren Verbindungsblechen und in einem bestimmten Muster angeordneten Schraubengarnituren. Eine Schraubengarnitur besteht hierbei aus einer Schraube, einer Mutter und zwei Unterlegscheiben.

In weiteren Ausführungsformen weisen die Turmbaugruppen jeweils einen vieleckigen, bevorzugt viereckigen Querschnitt auf. Der Querschnitt meint die Ausdehnungen in einer Ebene senkrecht zur Längsachse des Gittermastturms.

In Ausführungsformen unterscheiden sich die einzelnen Turmbaugruppensegmente in ihren Abmessungen voneinander. Abmessungen der Turmbaugruppensegmente sind bspw. die Höhe, d.h. die Ausdehnung entlang der Längsachse des Gittermastturms, und die Abmessungen des Querschnitts, d.h. die Abmessungen in einer Ebene senkrecht zur Höhe. So kann es vorteilhaft sein, dass insbesondere die Turmbaugruppensegmente der unteren Turmbaugruppe unterschiedliche Querschnitte und Höhen aufweisen. In weiteren Ausführungsformen weisen die einzelnen Turmbaugruppensegmente der unteren Turmbaugruppe einen variierenden Querschnitt entlang der Höhe des jeweiligen Turmbaugruppensegments auf. Dadurch kann vorteilhaft eine entlang der Längsachse des Gittermastturms pyramidenstumpfartig-zulaufende Form der unteren Turmbaugruppe erzielt werden, die eine erhöhte Standsicherheit und Stabilität bietet. Dabei variieren die Abmessungen der jeweiligen Turmbaugruppensegmente derart, dass ein fließender Übergang zwischen den einzelnen die untere Turmbaugruppe bildenden Turmbaugruppensegmenten erzielt wird.

In Ausführungsformen weisen die Turmbaugruppensegmente der oberen Turmbaugruppe unterschiedliche Querschnitte und Höhen auf. In weiteren Ausführungsformen weisen einige der Turmbaugruppensegmente der oberen Turmbaugruppe den gleichen Querschnitt auf. Vorteilhaft sind das die oberen Turmbaugruppesegmente der oberen Turmbaugruppe, d.h. die Turmbaugruppensegmente, die das obere Ende der oberen Turmbaugruppe bilden, welches mit einer Rotor-Gondel-Baugruppe verbindbar ausgebildet ist. In weiteren Ausführungsformen ist das erste Turmbaugruppensegment der oberen Turmbaugruppe, welches im fertig installierten Zustand des Gittermastturms direkt auf der unteren Turmbaugruppe angeordnet ist, als Kopplungsstück ausgebildet. Das Kopplungsstück ermöglicht vorteilhaft eine stabile Verbindung der unteren und der oberen Turmbaugruppe im fertig installieren Zustand.

In weiteren Ausführungsformen umfasst die untere Turmbaugruppe fünf Turmbaugruppensegmente, deren Querschnitt als auch Höhe untereinander und deren Querschnitt entlang der einzelnen Turmbaugruppensegmente derart variieren, dass die untere Turmbaugruppe vorteilhaft einen Pyramidenstumpf bildet.

In Ausführungsformen umfasst die obere Turmbaugruppe zwölf Turmbaugruppensegmente. Dabei weisen die ersten sechs Turmbaugruppensegmente einen entlang der Höhe variierenden Querschnitt auf, so dass diese vorteilhaft eine Verlängerung der pyramidenstumpfartig ausgebildeten unteren Turmbaugruppe darstellen. Die nachfolgenden sechs Turmbaugruppensegmente der oberen Turmbaugruppe weisen in Ausführungsformen die gleichen Abmessungen des Querschnitts auf. In weiteren Ausführungsformen unterscheiden sich die Turmbaugruppensegmente der oberen Turmbaugruppe jeweils hinsichtlich ihrer Höhe voneinander.

Dabei sind die Abmessungen der Turmbaugruppensegmente der oberen bzw. der unteren Turmbaugruppe jeweils derart gewählt, dass im abgesenkten Zustand die obere Turmbaugruppe vollständig innerhalb der unteren Turmbaugruppe angeordnet werden kann.

In weiteren Ausführungsformen weisen die einzelnen Turmbaugruppensegmente jeweils vier Eckstiele auf, die entlang der Höhe des jeweiligen Turmbaugruppensegmentes bzw. entlang der Längsachse des Gittermastturms verlaufen. Die Eckstiele werden dabei jeweils aus mindesten vier L-förmigen Profilen, die lösbar miteinander verbunden sind, gebildet. Jeder Schenkel eines L-förmigen Profils ist lösbar mit einem Schenkel eines weiteren L-förmigen Profils verbunden. Dadurch werden vorteilhaft Eckstiele mit einem kreuzförmigen Querschnitt gebildet. In weiteren Ausführungsformen sind jeweils zwischen den Schenkeln miteinander verbundener L-förmiger Profile Distanzbleche angeordnet. In weiteren Ausführungsformen bilden die vier Außenkanten des kreuzförmigen Querschnitts der Eckstiele Gleitflächen. Die Außenkanten des kreuzförmigen Querschnitts meinen dabei die nach außen gerichteten Flächen der vier Arme, die den kreuzförmigen Querschnitt bilden.

In bevorzugten Ausführungsformen sind die zwei Führungsrahmen in einem Abstand von 10 m bis 30 m zueinander angeordnet.

Diese bilden vorteilhaft die Stütz- und Gleitzone, die eine Stabilisierung während des Anhebens und/oder Absenkens ermöglicht und ein Kippen der oberen Turmbaugruppe während des Anhebens und/oder Absenkens verhindert.

In bevorzugten Ausführungsformen umfasst das Stabilisierungssystem mindestens eine Plattform, vier beweglich gelagerte Stützarme, und mehrere Vorrichtungen zum Heben und Senken, wobei die vier beweglich gelagerten Stützarme an ihrem unteren Ende jeweils mit einem Scharnier temporär mit der Plattform verbunden sind, und an ihrem oberen Ende jeweils eine Führungsvorrichtung aufweisen, und wobei die vier beweglich gelagerten Stützarme über Zugstreben oder Stahlseile als Y- oder V-förmige Verbinder untereinander und mit den auf der Plattform angeordneten Vorrichtungen zum Heben und Senken verbunden sind.

Vorteilhaft ermöglicht ein derartiges Stabilisierungssystem die Stabilisierung des Gittermastturms während des Hebe- und/oder Absenkprozesses und verhindert ein Kippen und/oder Verkanten der oberen Turmbaugruppe, insbesondere bei plötzlich auftretenden Belastungen, wie bspw. Winden.

In Ausführungsformen wird die Plattform durch einen der beiden Führungsrahmen, bevorzugt den oberen der beiden Führungsrahmen, gebildet und ist damit Teil der Stütz- und Gleitzone.

In weiteren Ausführungsformen sind die Stützarme als Verbinder in Gitterbauweise ausgebildet und dienen im fertig installierten Zustand der Verbindung der unteren Turmbaugruppe mit der oberen Turmbaugruppe. Vorteilhaft dienen die Stützarme der Stabilisierung der oberen Turmbaugruppe während des Hebe- und/oder Absenkprozesses und gleiten mit ihrem oberen Ende an der oberen Turmbaugruppe entlang. Dazu sind die beweglichen Stützarme an ihrem unteren Ende jeweils mit einem Scharnier temporär mit der Plattform derart verbunden, dass sich die Stützarme während des Hebe- bzw. Absenkprozesses zur Längsachse des Gittermastturms weg bzw. hin neigen können. Die Scharniere ermöglichen demnach eine Drehung der Stützarme um eine Achse in der Ebene der Plattform.

In Ausführungsformen sind die mehreren Vorrichtungen zum Heben und Senken temporär auf der Plattform installiert.

In bevorzugten Ausführungsformen ist die Führungsvorrichtung als Führungsblock mit Gleitbelag und/oder als Führungsrolle mit Gleitbelag ausgebildet.

Vorteilhaft wird dadurch eine verminderte Reibung bzw. ein Gleiten der Stützarme entlang der Außenkanten bzw. Gleitflächen der Eckstiele der oberen Turmbaugruppe beim Anheben und/oder Absenken ermöglicht. Weiterhin vorteilhaft werden dadurch eventuell vorhanden Korrosionsschutzbeschichtungen auf den Eckstielen nicht beschädigt.

In Ausführungsformen ist ein Führungsblock und/oder Führungsrolle derart ausgebildet, dass dieser zwei Laufflächen mit Gleitbelägen aufweist, wobei die Laufflächen in einem Winkel von 90° zueinander positioniert sind. Dabei steht jeweils eine Lauffläche des Führungsblocks und/oder Führungsrolle mit einer Gleitfläche eines Eckstiels während des Hebe- und/oder Absenkprozesses in Verbindung miteinander und ermöglichen das Gleiten der Stützarme entlang der oberen Turmbaugruppe.

In bevorzugten Ausführungsformen sind die mehreren Vorrichtungen zum Heben und Senken als Winden oder zweite Litzenheber ausgebildet.

Vorteilhaft dienen die zweiten Litzenheber zum Stabilisieren der Hubbaugruppe während des Anhebens und/oder Absenkens. In Ausführungsformen weist das Stabilisierungssystem vier Vorrichtungen zum Heben und Senken, ausgebildet als zweite Litzenheber auf. In weiteren Ausführungsformen sind die Mehrzahl der Vorrichtungen zum Heben und Senken gleichmäßig auf der Plattform angeordnet.

In weiteren Ausführungsformen weisen die zweiten Litzenheber jeweils einen Hub im Bereich von 20 m bis 30 m auf. In Ausführungsformen weisen die zweiten Litzenheber jeweils eine Kapazität im Bereich von 40 t bis 80 t auf.

In weiteren Ausführungsformen weisen die ersten und die zweiten Litzenheber ein gemeinsames Hydraulikaggregat und eine gemeinsame Steuereinheit auf. In Ausführungsformen weisen die zweiten Litzenheber jeweils ein Hydraulikaggregat und eine Steuereinheit auf. In weiteren Ausführungsformen weisen die zweiten Litzenheber ein gemeinsames Hydraulikaggregat und/oder eine gemeinsame Steuereinheit auf.

Ein weiterer Aspekt der Erfindung betrifft ein Verfahren zum Heben eines teleskopierbaren Gittermastturms aufweisend mindestens die folgenden Schritte:
a) Bereitstellen eines erfindungsgemäßen teleskopierbaren Gittermastturms im abgesenkten Zustand, wobei die obere Turmbaugruppe des teleskopierbaren Gittermasts temporär auf dem Führungselement montiert wird und die obere Turmbaugruppe und das Führungselement vollständig innerhalb der unteren Turmbaugruppe angeordnet werden, und das Stabilisierungssystem derart auf der unteren Turmbaugruppe installiert wird, dass die Plattform des Stabilisierungssystems durch einen der Führungsrahmen gebildet wird;
b) Montieren der Mehrzahl erster temporär einsetzbarer Litzenheber auf der Plattform des Stabilisierungssystems und Verbinden der Litzen mit Lastaufnahmepunkten an dem Führungselement,
c) Anheben der oberen Turmbaugruppe,
d) Verbinden der oberen und der unteren Turmbaugruppe,
e) Demontieren des Führungselements und Ablassen des Führungselements innerhalb der unteren Turmbaugruppe bis zu einer Endposition,
f) Demontieren der ersten temporären Litzenheber.

Vorteilhaft ermöglicht ein derartiges Verfahren das Anheben eines erfindungsgemäßen teleskopierbaren Gittermastturms auf eine Nabenhöhe von mindestens 300 m ohne aufwendige derzeit für diese Nabenhöhen nicht verfügbare Krantechnik. Weiterhin vorteilhaft ermöglicht ein derartiges Verfahren eine Stabilisierung und Optimierung des Schwerpunkts des Gittermastturms während des gesamten Hebeprozesses.

In Ausführungsformen wird der Hebeprozess in der Reihenfolge a), b), c), d), e), f) durchgeführt. In Ausführungsformen wird in Schritt a) ein Gittermastturm bereitgestellt, dessen untere und die obere Turmbaugruppe jeweils aus mehreren Turmbaugruppensegmenten in Gitterbauweise gebildet sind, die jeweils miteinander verbunden durch geeignete Verbindungsmittel die untere bzw. die obere Turmbaugruppe bilden.

In Ausführungsformen wird die Plattform des Stabilisierungssystems durch den oberen der beiden Führungsrahmen des bereitgestellten Gittermastturms gebildet.

In weiteren Ausführungsformen wird in Schritt a) das Stabilisierungssystem installiert, indem vier beweglich gelagerte Stützarme und mehrere Vorrichtungen zum Heben und Senken auf der Plattform des Stabilisierungssystem installiert werden. In Ausführungsformen werden dazu die vier beweglich gelagerten Stützarme an ihrem unteren Ende jeweils mit einem Scharnier temporär mit der Plattform des Stabilisierungssystems, und die vier beweglich gelagerten Stützarme über Zugstreben oder Stahlseile als Y- oder V-förmige Verbinder untereinander und mit den auf der Plattform des Stabilisierungssystems angeordneten Vorrichtungen zum Heben und Senken verbunden. In weiteren Ausführungsformen werden als Winden oder zweite Litzenheber ausgebildete Vorrichtungen zum Heben und Senken auf der Plattform des Stabilisierungssystem installiert.

In Ausführungsformen wird in Schritt a) ein teleskopierbarer Gittermastturm mit einer auf der oberen Turmbaugruppe installierten Rotor-Gondel-Baugruppe bereitgestellt. In weiteren Ausführungsformen wird eine Rotor-Gondel-Baugruppe nach Schritt a) auf der oberen Turmbaugruppe installiert. In weiteren Ausführungsformen wird eine Rotor-Gondel-Baugruppe nach Schritt e) installiert.

In weiteren Ausführungsformen werden in Schritt b) vier temporär einsetzbare erste Litzenheber auf der Plattform des Stabilisierungssystems montiert und die Litzen der temporär einsetzbaren ersten Litzenheber mit den Lastaufnahmepunkten an dem Führungselement verbunden.

In weiteren Ausführungsformen werden in Schritt d) die obere und die untere Turmbaugruppe mittels der Stützarme des Stabilisierungssystems miteinander verbunden.

In Ausführungsformen wird in Schritt e) das Führungselement nach dem Anheben des Gittermastturms in den fertig installierten Zustand demontiert und innerhalb des Gittermastturms bzw. innerhalb der unteren Turmbaugruppe des Gittermastturms abgelassen bis zu einer Endposition. In weiteren Ausführungsformen erfolgt das Ablassen des Führungselements in Schritt e) mittels der temporär eingesetzten ersten Litzenheber. Eine Endposition meint dabei eine Position des Führungselements innerhalb der Gittermastturms im fertig installierten Zustand, bei dem das Führungselement innerhalb der unteren Turmbaugruppe angeordnet und fixiert ist und für Absenkprozesse infolge von Wartung und/oder Reparatur zur Verfügung steht. In Ausführungsformen ist die Endposition des Führungselement auf der Aufstellfläche des Gittermastturms, und das Führungselement ist durch ein Fundament auf der Aufstellfläche fixiert. In Ausführungsformen werden in Schritt f) die ersten Litzenheber von der Plattform des Stabilisierungssystems demontiert.

In weiteren Ausführungsformen werden in Schritt f) oder nach Schritt f) die zweiten Litzenheber oder Winden und die Zugstreben oder Stahlseile des Stabilisierungssystems demontiert.

In Ausführungsformen kann es vorteilhaft sein, wenn das Anheben in Schritt c) in mehreren Teilschritten, bspw. zwei Teilschritten, erfolgt. In weiteren Ausführungsformen erfolgt somit bspw. ein Anheben in einem ersten Teilschritt c1) und ein Anheben in einem zweiten Teilschritt c2). Das ist insbesondere dann vorteilhaft, wenn in Schritt a) ein teleskopierbarer Gittermastturm mit einer auf der oberen Turmbaugruppe installierten Rotor-Gondel-Baugruppe bereitgestellt oder eine Rotor-Gondel-Baugruppe nach Schritt a) und vor Schritt c) auf der oberen Turmbaugruppe installiert wird. Die große Masse der bereits auf der oberen Turmbaugruppe installierten Rotor-Gondel-Baugruppe erfordert für einen kippsicheren und stabilen Anhebe- bzw. Absenkprozess eine Absenkung und Verlagerung des Schwerpunkts des Gittermastturms. Dies kann durch zusätzliche Schritte umfassend das Einsetzten und Fixieren von ersten und/oder zweiten temporär einsetzbaren Zusatzgewichten erreicht werden.

In einer bevorzugten Ausführungsform wird in einem weiteren Schritt eine Rotor-Gondel-Baugruppe auf einem oberen Ende der oberen Turmbaugruppe montiert.

In Ausführungsformen wird dazu ein Verbindungsstück auf dem oberen Ende der oberen Turmbaugruppe montiert, welches die Verbindung der Rotor-Gondel-Baugruppe mit der oberen Turmbaugruppe ermöglicht.

In weiteren Ausführungsformen wird die Rotor-Gondel-Baugruppe mittels eines dem Fachmann bekannten Tower top Krans auf dem oberen Ende der oberen Turmbaugruppe montiert. Ein Tower Top Kran meint eine Hebevorrichtung zum Heben der Rotor-Gondel-Baugruppe, welche an der oberen Turmbaugruppe installiert wird.

Die Rotor-Gondel-Baugruppe wird in Ausführungsformen nach Schritt c), insbesondere nach Schritt d) installiert. Dadurch wird der Hebeprozess vorteilhaft insgesamt stabiler, da das Gewicht der Rotor-Gondel-Baugruppe nicht mit angehoben werden muss. Weiterhin vorteilhaft können dadurch zusätzliche Prozessschritte zum Einsetzen und Fixieren temporär einsetzbarer Zusatzgewichte eingespart bzw. deren Masse verringert werden.

In einer bevorzugten Ausführungsform werden die ersten temporär einsetzbaren Litzenheber auf einem am oberen Ende der unteren Turmbaugruppe installierten Führungsrahmen montiert.

In Ausführungsformen werden die ersten Litzenheber auf dem oberen der beiden Führungsrahmen des Gittermastturms installiert, wobei der obere Führungsrahmen die Plattform des Stabilisierungssystems bildet.

In einer bevorzugten Ausführungsform werden die Litzen der temporären ersten Litzenheber an der unteren Turmbaugruppe entlang nach unten in Richtung Aufstellfläche des Gittermastturms geführt.

Die ermöglicht vorteilhaft ein Aufwickeln der Litzen am Boden, der Aufstellfläche des Gittermastturms.

In Ausführungsformen werden die Litzen der temporären ersten Litzenheber entlang der Eckstiele der unteren Turmbaugruppe nach unten, in Richtung der Aufstellfläche des Gittermastturms, geführt.

In bevorzugten Ausführungsformen weist das Verfahren zum Anheben eines teleskopierbaren Gittermastturms zusätzlich einen Schritt g) zum Einsetzen eines ersten temporär einsetzbaren Zusatzgewichtes und/oder einen zusätzlichen Schritt h) zum Einsetzen eines zweiten temporär einsetzbaren Zusatzgewichtes auf.

Dadurch wird vorteilhaft ein Ausbalancieren bzw. Zentrieren des Schwerpunkts des teleskopierbaren Gittermastturms und eine dynamische Stabilisierung während des Hebe- und/oder Absenkprozesseses ermöglicht, insbesondere wenn eine Rotor-Gondel-Baugruppe bereits vor dem Anheben in Schritt c) bzw. c1) auf der oberen Turmbaugruppe installiert wird oder in Schritt a) ein teleskopierbarer Gittermastturm mit einer auf der oberen Turmbaugruppe installierten Rotor-Gondel-Baugruppe bereitgestellt wird.

In Ausführungsformen erfolgt Schritt g) nach Schritt b) und vor Schritt c). So kann in Schritt g) bei einem teleskopierbaren Gittermastturm mit einer endgültigen Nabenhöhe von 300 m und einer auf der oberen Turmbaugruppe installierten Rotor-Gondel-Baugruppe mit einer Masse von 200 t ein erstes temporär einsetzbares Zusatzgewicht mit einer Masse von 120 t etwa 7 m hinter der Längsachse des Gittermastturms, vorteilhaft auf der der Rotor-Baugruppe als Teil der Rotor-Gondel-Baugruppe gegenüberliegenden Seite der Längsachse, im Führungselement angeordnet und temporär fixiert werden. Dadurch wird vorteilhaft der Schwerpunkt abgesenkt und auf die Turmachse verlagert und in Schritt c) bzw. c1) und c2) ein stabiles, kippsicheres Anheben ermöglicht. So wird in Ausführungsformen vorteilhaft die obere Turmbaugruppe über die temporär eingesetzten ersten Litzenheber in einem ersten Teilschritt c1) um 40 m bis 70 m angehoben.

In weiteren Ausführungsformen kann es weiterhin vorteilhaft sein, wenn in Schritt h) ein zweites temporär einsetzbares Zusatzgewicht unterhalb des Führungselementes auf der Längsachse des Gittermastturms angeordnet und temporär fixiert wird. Dadurch wird vorteilhaft der Schwerpunkt weiter abgesenkt und das weitere kippstabile Anheben des Gittermastturms auf eine endgültige Nabenhöhe von mindestens 300 m ermöglicht. In weiteren Ausführungsformen wird Schritt h) nach dem Anheben in einem ersten Teilschritt und vor dem Anheben in einem weiteren, bspw. einem zweiten, Teilschritt c2) durchgeführt. So kann in Schritt h) bei einem teleskopierbaren Gittermastturm mit einer endgültigen Nabenhöhe von 300 m und einer auf der oberen Turmbaugruppe installierten Rotor-Gondel-Baugruppe mit einer Masse 200 t ein zweites temporär einsetzbares Zusatzgewicht mit einer Masse von 100 t unterhalb des Führungselementes auf der Längsachse des Gittermastturms angeordnet und temporär fixiert werden. Dadurch wird der Schwerpunkt vorteilhaft noch weiter abgesenkt und ein Anheben des Gittermastturms auf eine endgültige Nabenhöhe von mindestens 300 m ist möglich.

In Ausführungsformen werden Schritt g) und Schritt h) durchgeführt, wobei Schritt g) nach Schritt b) und vor Schritt c) bzw. c1) durchgeführt wird und Schritt g) ein Anheben in einem ersten Teilschritt c1) folgt und nachfolgend Schritt h) und anschließend das Anheben in einem zweiten Teilschritt c2) erfolgt.

In weiteren Ausführungsformen werden in Schritt f) oder nach Schritt f) die eventuell eingesetzten ersten und zweiten temporär einsetzbaren Zusatzgewichte demontiert.

Ein weiterer Aspekt der Erfindung betrifft die Verwendung eines erfindungsgemäßen teleskopierbaren Gittermastturms in einer Windenergieanlage, insbesondere einer Onshore-Windenergieanlage, zur Erzeugung von elektrischem Strom.

Ein weiterer Aspekt der Erfindung betrifft ein Verfahren zum Absenken eines teleskopierbaren Gittermastturms aufweisend mindestens die folgenden Schritte:
i. Bereitstellen eines erfindungsgemäßen teleskopierbaren Gittermastturms im fertig installierten Zustand, wobei die obere Turmbaugruppe auf der unteren Turmbaugruppe montiert und mit dieser verbunden, und das Führungselement in seine Endposition innerhalb der unteren Turmbaugruppe abgelassen ist,
ii. Montieren der ersten temporären Litzenheber auf der Plattform des Stabilisierungssystems, die durch einen der Führungsrahmen gebildet wird, und Verbinden der Litzen mit Lastaufnahmepunkten an dem Führungselement,
iii. Anheben des Führungselementes aus seiner Endposition und temporäre Montage der oberen Turmbaugruppe auf dem Führungselement,
iv. Demontage der oberen und unteren Turmbaugruppe,
v. Installation des Stabilisierungssystem auf der unteren Turmbaugruppe,
vi. Absenken der oberen Turmbaugruppe,
vii. Demontage der ersten temporär einsetzbaren Litzenheber.

Vorteilhaft ermöglicht ein derartiges Verfahren das Absenken eines erfindungsgemäßen teleskopierbaren Gittermastturms von einer Nabenhöhe von mindestens 300 m ohne aufwendige derzeit für diese Nabenhöhen nicht verfügbare Krantechnik. Weiterhin vorteilhaft ermöglicht ein derartiges Verfahren eine Stabilisierung und Optimierung des Schwerpunkts des Gittermastturms während des gesamten Absenkprozesses.

In Ausführungsformen wird der Absenkprozess in der Reihenfolge i), ii), iii), iv), v), vi), vii) durchgeführt.

In Ausführungsformen wird in Schritt i) ein Gittermastturm bereitgestellt, der eine untere und eine obere Turmbaugruppe aufweist, wobei die untere und die obere Turmbaugruppe jeweils aus mehreren Turmbaugruppensegmenten in Gitterbauweise gebildet sind, die jeweils miteinander verbunden durch geeignete Verbindungsmittel die untere bzw. die obere Turmbaugruppe bilden.

In weiteren Ausführungsformen wird in Schritt i) ein teleskopierbarer Gittermastturm mit einer auf der oberen Turmbaugruppe installierten Rotor-Gondel-Baugruppe bereitgestellt. In diesem Fall kann in Ausführungsformen eine Demontage der Rotor-Gondel-Baugruppe vorteilhaft vor Schritt ii) erfolgen, bspw. mittels eines Tower Top Krans. In weiteren Ausführungsformen kann die Demontage der Rotor-Gondel-Baugruppe nach Schritt vi) erfolgen.

In Ausführungsformen wird die Plattform des Stabilisierungssystems durch den oberen der beiden Führungsrahmen des bereitgestellten Gittermastturms gebildet.

In Ausführungsformen werden in Schritt ii) vier temporär einsetzbare erste Litzenheber auf der Plattform des Stabilisierungssystems montiert, die durch einen der Führungsrahmen gebildet wird, und die Litzen der temporär einsetzbaren ersten Litzenheber mit den Lastaufnahmepunkten an dem Führungselement verbunden.

In weiteren Ausführungsformen wird in Schritt iii) das Führungselement aus seiner Endposition innerhalb der unteren Turmbaugruppe des Gittermastturms angehoben. In weiteren Ausführungsformen erfolgt das Anheben des Führungselements in Schritt iii) mittels der temporär eingesetzten ersten Litzenheber.

In weiteren Ausführungsformen werden in Schritt iv) die obere und die untere Turmbaugruppe, welche mittels der Stützarme des Stabilisierungssystems miteinander verbunden sind, demontiert.

In Schritt v) wird das Stabilisierungssystem installiert, indem die in Schritt iv) demontierten Stützarme als vier beweglich gelagerte Stützarme, und mehrere Vorrichtungen zum Heben und Senken auf der Plattform des Stabilisierungssystem installiert werden. In Ausführungsformen werden dazu die vier beweglich gelagerten Stützarme an ihrem unteren Ende jeweils mit einem Scharnier temporär mit der Plattform des Stabilisierungssystems, und die vier beweglich gelagerten Stützarme über Zugstreben oder Stahlseile als Y- oder V-förmige Verbinder untereinander und mit den auf der Plattform des Stabilisierungssystems angeordneten Vorrichtungen zum Heben und Senken verbunden. In weiteren Ausführungsformen werden als Winden oder zweite Litzenheber ausgebildete Vorrichtungen zum Heben und Senken auf der Plattform des Stabilisierungssystem installiert.

In Ausführungsformen kann es vorteilhaft sein, wenn das Absenken in Schritt vi) in mehreren Teilschritten, bspw. zwei Teilschritten, erfolgt. Damit erfolgt in Ausführungsformen bspw. das

Absenken in einem ersten Teilschritt vi1) und einem zweiten Teilschritt vi2). Dies ist insbesondere dann vorteilhaft, wenn in Schritt i) ein teleskopierbarer Gittermastturm mit einer auf der oberen Turmbaugruppe installierten Rotor-Gondel-Baugruppe bereitgestellt wird. Die große Masse der auf der oberen Turmbaugruppe installierten Rotor-Gondel-Baugruppe erfordert für einen kippsicheren und stabilen Absenkprozess eine Verlagerung des Schwerpunkts des Gittermastturms. Dies kann durch zusätzliche Schritte umfassend das Einsetzten und Fixieren von ersten und/oder zweiten temporär einsetzbaren Zusatzgewichten erreicht werden.

In bevorzugten Ausführungsformen weist das Verfahren zum Absenken eines teleskopierbaren Gittermastturms zusätzlich einen Schritt viii) zum Einsetzen eines zweiten temporär einsetzbaren Zusatzgewichtes und/oder einen zusätzlichen Schritt ix) zum Einsetzen eines ersten temporär einsetzbaren Zusatzgewichtes auf. Dies ist insbesondere dann vorteilhaft, wenn ein teleskopierbarer Gittermastturm mit einer auf der oberen Turmbaugruppe installierten Rotor-Gondel-Baugruppe abgesenkt werden soll. Im Falle, dass ein teleskopierbarer Gittermastturm mit einer endgültigen Nabenhöhe von 300 m und einer auf der oberen Turmbaugruppe installierter Rotor-Gondel-Baugruppe mit einer Masse von 200 t abgesenkt werden soll, wird in Schritt viii) ein zweites temporär einsetzbares Zusatzgewicht mit einer Masse von 100 t unterhalb des Führungselementes auf der Längsachse des Gittermastturms angeordnet und temporär fixiert. Dadurch kann die obere Turmbaugruppe des teleskopierbaren Gittermastturm in einem ersten Teilschritt vi1) um 80 m bis 110 m über die temporär eingesetzten ersten Litzenheber abgesenkt werden. Es ist dann weiterhin vorteilhaft, dass in einem weiteren Schritt ix) ein erstes temporär einsetzbares Zusatzgewicht hinter der Längsachse des Gittermastturms, vorteilhaft auf der der Rotor-Baugruppe als Bestandteil der Rotor-Gondel-Baugruppe gegenüberliegenden Seite der Längsachse, im Führungselement angeordnet und temporär fixiert wird. Bei einem Gittermastturm mit einer Nabenhöhe von 300 m und einer auf der oberen Turmbaugruppe installierter Rotor-Gondel-Baugruppe mit einer Masse von 200 t wird das temporär einsetzbare zweite Zusatzgewicht mit einer Masse von 120 t etwa 7 m hinter der Längsachse des Gittermastturms, vorteilhaft auf der der Rotor-Baugruppe als Bestandteil der Rotor-Gondel-Baugruppe gegenüberliegenden Seite der Längsachse, im Führungselement angeordnet und temporär fixiert. Dadurch ist das weitere Absenken des Gittermastturms in einem zweiten Teilschritt vi2) möglich, so dass der Gittermastturm in seinen abgesenkten Zustand mit minimaler Höhe abgesenkt wird.

In Ausführungsformen wird Schritt viii) vor Schritt iv) durchgeführt. In weiteren Ausführungsformen wird Schritt ix) nach Schritt iii) durchgeführt. In Ausführungsformen erfolgt in Schritt viii) das Einsetzen eines zweiten temporär einsetzbaren Zusatzgewichtes und nachfolgend ein Absenken in einem ersten Teilschritt vi1), gefolgt von Schritt ix) dem Einsetzen eines ersten temporär einsetzbaren Zusatzgewichtes und anschließend das Absenken in einem zweiten Teilschritt vi2).

In weiteren Ausführungsformen werden in Schritt vii) die ersten Litzenheber von der Plattform des Stabilisierungssystems demontiert.

In Ausführungsformen werden in Schritt vii) oder nach Schritt vii) die zweiten Litzenheber oder Winden und die Zugstreben oder Stahlseile des Stabilisierungssystems demontiert. In weiteren Ausführungsformen werden in Schritt vii) oder nach Schritt vii) evtl. eingesetzte erste und zweite temporäre einsetzbare Zusatzgewichte demontiert.

Die Erfindung ist nicht auf die dargestellten und beschriebenen Ausführungsformen beschränkt, sondern umfasst auch alle im Sinne der Erfindung gleich wirkenden Ausführungsformen. Ferner ist die Erfindung auch nicht auf die speziell beschriebenen Merkmalskombinationen beschränkt, sondern kann auch durch jede beliebige andere Kombination von bestimmten Merkmalen aller insgesamt offenbarten Einzelmerkmale definiert sein, sofern sich die Einzelmerkmale nicht gegenseitig ausschließen, oder eine spezifische Kombination von Einzelmerkmalen nicht explizit ausgeschlossen ist.

### Ausführungsbeispiele

Nachfolgend soll die Erfindung anhand eines Ausführungsbeispiels eingehender erläutert werden. Das Ausführungsbeispiel dabei die Erfindung beschreiben, ohne diese zu beschränken. Anhand von Zeichnungen wird die Erfindung näher erläutert. Dabei zeigen
- **Fig. 1**: eine Ausführungsform eines Gittermastturms in der Übersichtsdarstellung in der Front-, Seiten- und perspektivischen Ansicht,
- **Fig. 2**: eine weitere Ausführungsform eines Gittermastturms,
- **Fig. 3**: ein Stabilisierungssystem einer Ausführungsform eines Gittermastturms als Detailansicht in der Frontansicht, Draufsicht und perspektivischer Ansicht,
- **Fig. 4**: schematisch verschiedene Stadien einer Ausführungsform eines Hebeprozesses zum Heben eines Gittermastturms.

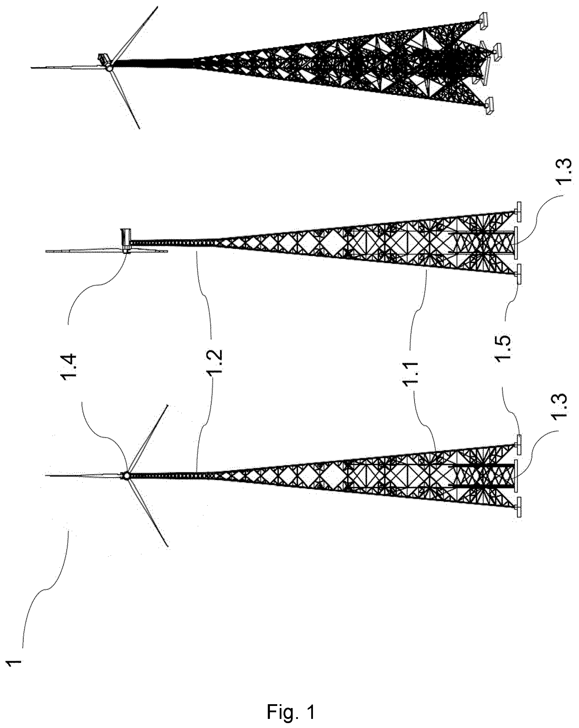

**Figur 1** zeigt eine Ausführungsform eines erfindungsgemäßen teleskopierbaren Gittermastturms 1 im fertig errichteten Zustand von links nach rechts in einer Front-, Seiten- und perspektivischen Ansicht. Der Gittermastturm 1 weist eine untere Turmbaugruppe 1.1 und eine obere Turmbaugruppe 1.2 auf. Der Gittermastturm 1 weist weiterhin ein Hubsystem zum Anheben und Absenken der oberen Turmbaugruppe 1.2 auf. Das Hubsystem umfasst mindestens ein Führungselement 1.3, zwei Führungsrahmen, ein Stabilisierungssystem und eine Mehrzahl temporär einsetzbarer erster Litzenheber. Der Gittermastturm 1 weist eine Rotor-Gondel-Baugruppe 1.4 auf, die mit der oberen Turmbaugruppe 1.2 verbindbar ausgebildet ist. Die obere Turmbaugruppe 1.2 weist ein Verbindungsstück (nicht dargestellt) auf, mittels dessen die obere Turmbaugruppe 1.2 mit der Rotor-Gondel-Baugruppe 1.4 verbindbar ausgebildet ist. Weiterhin zu sehen sind Fundamente 1.5, mit denen der Gittermastturm 1 auf der Aufstellfläche, dem Boden, fixiert ist.

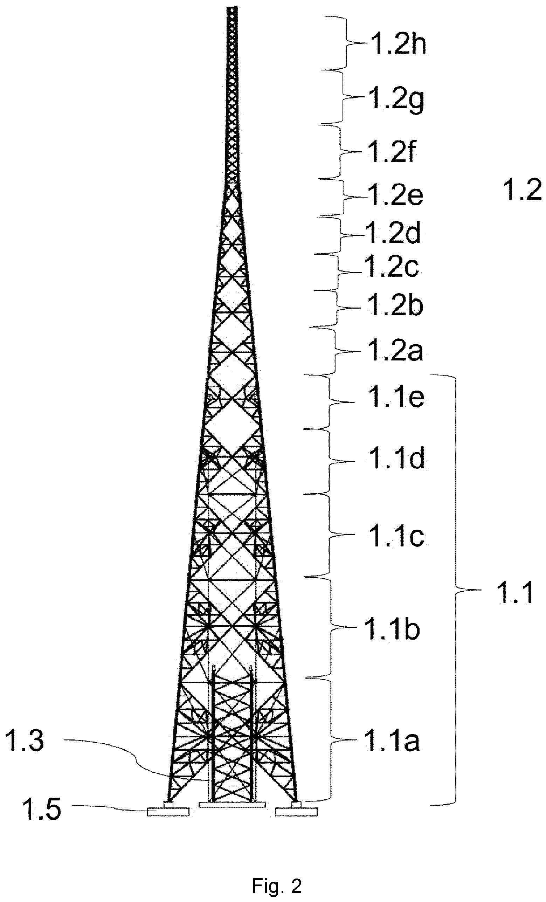

**Figur 2** zeigt eine weitere Ausführungsform eines erfindungsgemäßen Gittermastturms 1 im fertig errichteten Zustand ohne Rotor-Gondel-Baugruppe. Zu sehen sind die untere und die obere Turmbaugruppe 1.1 und 1.2., jeweils in Gitterbauweise ausgebildet, und mehrere Turmbaugruppensegmente 1.1a -1.1e bzw. 1.2a-1.2h umfassend. Erkennbar ist weiterhin, dass die einzelnen Turmbaugruppensegmente 1.1a bis 1.1e variierende Abmessungen des Querschnitts aufweisen, so dass die untere Turmbaugruppe 1.1 einen Pyramidenstumpf bildet. Die Turmbaugruppensegmente der oberen Turmbaugruppe 1.2a - 1.2h sind derart ausgebildet, dass die unteren Turmbaugruppensegmente der oberen Turmbaugruppe eine Verlängerung des Pyramidenstumpfes der unteren Turmbaugruppe 1.1 bilden, wobei die oberen Turmbaugruppensegmente der oberen Turmbaugruppe 1.2 gleiche Abmessungen hinsichtlich ihres Querschnitts aufweisen. Die Turmbaugruppensegmente der oberen Turmbaugruppe 1.2a - 1.2h und der unteren Turmbaugruppe 1.1a - 1.1e weisen abweichende Abmessungen hinsichtlich ihrer Höhe auf. Ebenfalls erkennbar ist, dass das Führungselement 1.3 im fertig errichteten Zustand in einer Endposition durch ein Fundament 1.5 auf der Aufstellfläche des Gittermastturms 1 angeordnet und fixiert ist.

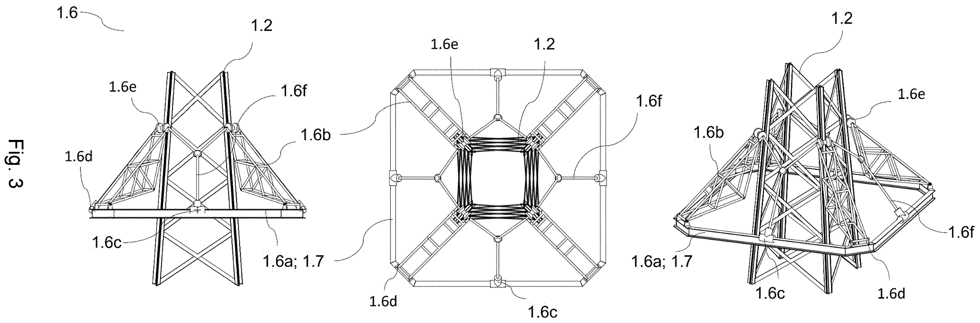

**Figur 3** zeigt ein Stabilisierungssystem 1.6 einer Ausführungsform eines Gittermastturms 1 als Detailansicht, von links nach rechts in der Frontsicht, Draufsicht und in perspektivischer Ansicht. Das Stabilisierungssystem 1.6 umfasst mindestens eine Plattform 1.6a, vier beweglich gelagerte Stützarme 1.6b und mehrere Vorrichtungen zum Heben und Senken 1.6c. Die Plattform 1.6a ist durch einen der beiden Führungsrahmen 1.7, bevorzugt durch den oberen der beiden Führungsrahmen 1.7. gebildet. Die vier beweglich gelagerten Stützarme 1.6b sind an ihrem unteren Ende jeweils mit einem Scharnier 1.6d temporär mit der Plattform 1.6a verbunden. An ihrem oberen Ende weisen die vier beweglich gelagerten Stützarme 1.6b jeweils eine Führungsvorrichtung 1.6e auf. Die vier beweglich gelagerten Stützarme 1.6b sind untereinander und mit den auf der Plattform 1.6a angeordneten Vorrichtungen zum Heben und Senken 1.6c über Zugstreben oder Stahlseile als Y-förmige Verbinder 1.6f verbunden. Die Vorrichtungen zum Heben und Senken 1.6c sind als zweite Litzenheber ausgebildet. Die vier beweglich gelagerten Stützarme 1.6b dienen als Verbinder zur Verbindung der unteren Turmbaugruppe 1.1 mit der oberen Turmbaugruppe 1.2 im fertig errichteten Zustand des Gittermastturms 1.

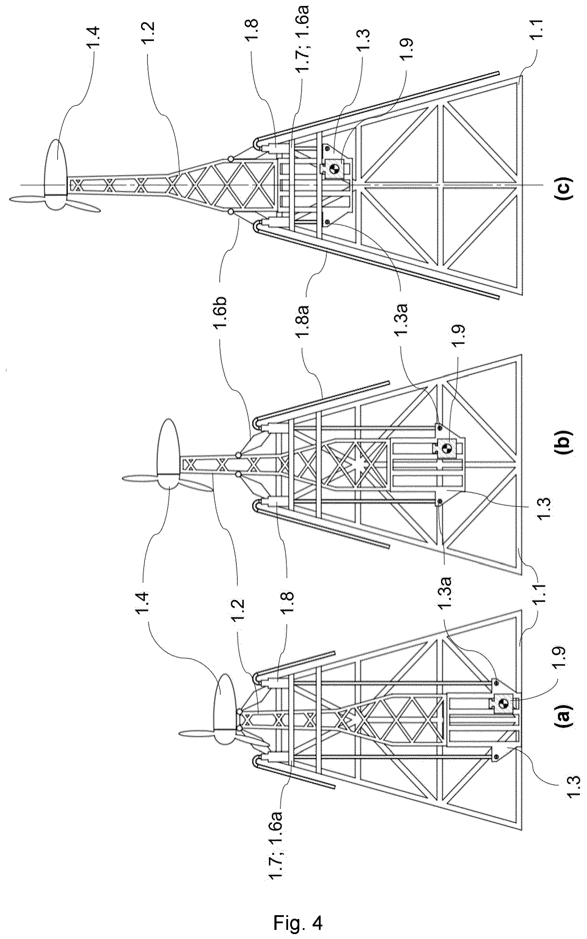

**Figur 4** zeigt schematisch verschiedene Stadien einer Ausführungsform eines Hebeprozesses zum Heben eines Gittermastturms 1.

In Fig. 4 (a) ist ein Gittermastturm 1 im abgesenkten Zustand zu Beginn des Anhebeprozesses dargestellt. Der Gittermastturm 1 weist eine untere und eine obere Turmbaugruppe 1.1, 1.2 auf. Die obere Turmbaugruppe 1.2 wird auf dem Führungselement 1.3, bevorzugt auf dem oberen Ende des Führungselements, temporär, d.h. für die Dauer des Anhebeprozesses, montiert. Die obere Turmbaugruppe 1.2, montiert auf dem Führungselement 1.3 ist damit im abgesenkten Zustand innerhalb der unteren Turmbaugruppe 1.1 angeordnet. Der Gittermastturm wird mit einer auf dem oberen Ende der oberen Turmbaugruppe 1.2 installierten Rotor-Gondel-Baugruppe 1.4 bereitgestellt oder die Rotor-Gondel-Baugruppe vor dem Anheben auf der oberen Turmbaugruppe montiert. Ein Stabilisierungssystem 1.6 wird derart auf der unteren Turmbaugruppe 1.1 montiert, dass die Plattform 1.6a des Stabilisierungssystems 1.6 durch einen Führungsrahmen 1.7, bevorzugt den oberen der beiden Führungsrahmen 1.7, gebildet wird. Die Führungsvorrichtungen (hier nicht gezeigt, 1.6e in Fig. 3) an den oberen Enden der beweglich gelagerten Stützarme 1.6b des Stabilisierungssystems 1.6 liegen an den Gleitflächen der Eckstiele der oberen Turmbaugruppe an, so dass diese beim Anheben an der oberen Turmbaugruppe entlanggleiten. Weiterhin werden eine Mehrzahl erster temporär einsetzbarer Litzenheber 1.8 auf der Plattform 1.6a des Stabilisierungssystems 1.6 installiert. Die Litzen der ersten Litzenheber werden am Turm entlang nach unten geführt 1.8a und mit Lastaufnahmepunkten 1.3a am unteren Ende des Führungselementes 1.3 verbunden. Ein erstes temporär einsetzbares Zusatzgewicht 1.9 wird hinter der Längsachse des Gittermastturms 1 eingesetzt und fixiert.

Fig. 4 (b) zeigt den Gittermastturm 1 in einem teilweise angehobenen Zustand, bspw. nach einem ersten Teilschritt des Anhebens. Es ist zu sehen, dass die Führungsvorrichtungen (hier nicht gezeigt, 1.6e in Fig. 3) der Stützarme 1.6b des Stabilisierungssystems 1.6 an den Gleitflächen der Eckstiele der oberen Turmbaugruppe 1.2 entlanggleiten, und damit eine verminderte Reibung und Stabilisierung der oberen Turmbaugruppe 1.2 ermöglichen. Vor dem Anheben in einem zweiten Teilschritt wird dazu ein temporär einsetzbares zweites Zusatzgewicht (nicht dargestellt) unterhalb des Führungselementes 1.3 auf der Längsachsachse des Gittermastturms 1 eingesetzt und fixiert.

Fig. 4 (c) zeigt den Gittermastturm 1 im vollständig angehobenen Zustand nach einem zweiten Teilschritt des Anhebens auf die endgültige Nabenhöhe. Zu erkennen ist, dass die Stützarme 1.6b des Stabilisierungssystem 1.6 der Kontur der oberen Turmbaugruppe 1.2 beim Anheben folgend von der Längsachse des Gittermastturms 1 weg geneigt sind.

Nachfolgend werden die untere und die obere Turmbaugruppe 1.1, 1.2 durch die Stützarme 1.6b des Stabilisierungssystems miteinander verbunden. Das Führungselement 1.3 wird demontiert und innerhalb der unteren Turmbaugruppe 1.1 bis zu einer Endposition herabgelassen und in dieser fixiert. Die zweiten Litzenheber, die ersten Litzenheber und die installierten ersten und zweiten temporär einsetzbaren Zusatzgewichte werden ebenfalls demontiert.

### Bezugszeichen

- 1: Gittermastturm
- 1.1: Untere Turmbaugruppe
- 1.1a - 1.1e: Turmbaugruppensegmente der unteren Turmbaugruppe
- 1.2: Obere Turmbaugruppe
- 1.2a - 1.2h: Turmbaugruppensegmente der oberen Turmbaugruppe
- 1.3: Führungselement
- 1.3a: Lastaufnahmepunkt
- 1.4: Rotor-Gondel-Baugruppe
- 1.5: Fundament
- 1.6: Stabilisierungssystem
- 1.6a: Plattform des Stabilisierungssystems
- 1.6b: Beweglich gelagerter Stützarm
- 1.6c: Vorrichtung zum Heben und Senken
- 1.6d: Scharnier
- 1.6e: Führungsvorrichtung
- 1.6f: Zugstreben oder Stahlseile als Y- oder V-förmige Verbinder
- 1.7: Führungsrahmen
- 1.8: Temporär einsetzbare erste Litzenheber
- 1.8a: Litzen der ersten Litzenheber mit Litzenführung
- 1.9: Temporär einsetzbares Zusatzgewicht

## Patentansprüche

1. Teleskopierbarer Gittermastturm einer Windkraftanlage, mindestens umfassend
- eine untere Turmbaugruppe,
- eine obere Turmbaugruppe, und
- ein Hubsystem zum Anheben und Absenken der oberen Turmbaugruppe, wobei das Hubsystem mindestens
• ein Führungselement,
• zwei Führungsrahmen,
• ein Stabilisierungssystem, und
• eine Mehrzahl temporär einsetzbarer erster Litzenheber umfasst.

2. Teleskopierbarer Gittermastturm nach Anspruch 1, **dadurch gekennzeichnet, dass** die obere Turmbaugruppe mit einer Rotor-Gondel-Baugruppe verbindbar ausgebildet ist.

3. Teleskopierbarer Gittermastturm nach Anspruch 1 oder 2, **dadurch gekennzeichnet, dass** das Hubsystem weiterhin temporär einsetzbare Zusatzgewichte zur Schwerpunktoptimierung aufweist.

4. Teleskopierbarer Gittermastturm nach Anspruch 3, **dadurch gekennzeichnet, dass** die temporär einsetzbaren Zusatzgewichte ein erstes und ein zweites Zusatzgewicht umfassen.

5. Teleskopierbarer Gittermastturm nach einem der Ansprüche 1 bis 4, **dadurch gekennzeichnet, dass** die untere und die obere Turmbaugruppe jeweils mehrere Turmbaugruppensegmente in Gitterbauweise umfassen.

6. Teleskopierbarer Gittermastturm nach einem der Ansprüche 1 bis 5, **dadurch gekennzeichnet, dass** die mindestens zwei Führungsrahmen in einem Abstand von 10 m bis 30 m zueinander angeordnet sind.

7. Teleskopierbarer Gittermastturm nach einem der Ansprüche 1 bis 6, **dadurch gekennzeichnet, dass** das Stabilisierungssystem mindestens
- eine Plattform,
- vier beweglich gelagerte Stützarme, und
- mehrere Vorrichtungen zum Heben und Senken umfasst,
wobei die vier beweglich gelagerten Stützarme an ihrem unteren Ende jeweils mit einem Scharnier temporär mit der Plattform verbunden sind, und an ihrem oberen Ende jeweils eine Führungsvorrichtung aufweisen, und
wobei die vier beweglich gelagerten Stützarme über Zugstreben oder Stahlseile als Y- oder V-förmige Verbinder untereinander und mit den auf der Plattform angeordneten Vorrichtungen zum Heben und Senken verbunden sind.

8. Teleskopierbarer Gittermastturm nach Anspruch 7, **dadurch gekennzeichnet, dass** die Führungsvorrichtung als Führungsblock mit Gleitbelag und/oder als Führungsrolle mit Gleitbelag ausgebildet ist.

9. Teleskopierbarer Gittermastturm nach einem der Ansprüche 1 bis 8, **dadurch gekennzeichnet, dass** die mehreren Vorrichtungen zum Heben und Senken als Winden oder zweite Litzenheber ausgebildet sind.

10. Verfahren zum Heben eines teleskopierbaren Gittermastturms, aufweisend mindestens die folgenden Schritte:
a) Bereitstellen eines teleskopierbaren Gittermastturms nach einem der Ansprüche 1 bis 9 im abgesenkten Zustand, wobei die obere Turmbaugruppe des teleskopierbaren Gittermasts temporär auf dem Führungselement montiert wird und die obere Turmbaugruppe und das Führungselement vollständig innerhalb der unteren Turmbaugruppe angeordnet werden,
und das Stabilisierungssystem derart auf der unteren Turmbaugruppe installiert wird, dass die Plattform des Stabilisierungssystems durch einen der Führungsrahmen gebildet wird,
b) Montieren der Mehrzahl erster temporär einsetzbarer Litzenheber auf der Plattform des Stabilisierungssystems und Verbinden der Litzen mit Lastaufnahmepunkten an dem Führungselement,
c) Anheben der oberen Turmbaugruppe,
d) Verbinden der oberen und der unteren Turmbaugruppe,
e) Demontieren des Führungselements und Ablassen des Führungselements innerhalb der unteren Turmbaugruppe bis zu einer Endposition,
f) Demontieren der ersten temporären Litzenheber.

11. Verfahren zum Heben eines teleskopierbaren Gittermastturms nach Anspruch 10, **dadurch gekennzeichnet, dass** eine Rotor-Gondel-Baugruppe auf einem oberen Ende der oberen Turmbaugruppe montiert wird.

12. Verfahren nach Anspruch 10 oder 11, die ersten temporär einsetzbaren Litzenheber auf einem am oberen Ende der unteren Turmbaugruppe installierten Führungsrahmen montiert werden.

13. Verfahren nach einem der Ansprüche 10 bis 12, **dadurch gekennzeichnet, dass** die Litzen des temporären ersten Litzenhebers an der unteren Turmbaugruppe entlang nach unten in Richtung Aufstellfläche des Gittermastturms geführt werden.

14. Verfahren nach einem der Ansprüche 10 bis 13, **dadurch gekennzeichnet, dass** das Verfahren zusätzlich einen Schritt g) zum Einsetzen eines temporär einsetzbaren Zusatzgewichtes und/oder einen zusätzlichen Schritt h) zum Einsetzen eines zweiten temporär einsetzbaren Zusatzgewichtes aufweist.

15. Verwendung eines teleskopierbaren Gittermastturms nach einem der Ansprüche 1 bis 9 in einer Windenergieanlage, insbesondere einer Onshore-Windenergieanlage, zur Erzeugung von elektrischem Strom.
